# DEMANDE DE BREVET EUROPEEN

(11) **EP 0 811 819 A2**
(43) Date de publication de la demande: **10.12.1997**
(21) Numéro de dépôt: 97401244.5
(22) Date de dépôt: 04.06.1997
(51) Int. Cl.: F28C 1/14

(54) **Réfrigérant hybride à circuit ouvert**

(30) Priorité: 04.06.1996 FR 9606880
(71) Demandeur: Air Traitement, 76550 Hautot-sur-Mer (FR)
(72) Inventeur: Girard, Denis, 94200 Ivry-sur-Seine (FR)
(74) Mandataire: Casalonga, Axel

(57) **Abrégé**

Réfrigérant hybride pour le refroidissement d'eau, comprenant à la fois des surfaces d'échange sans parois ou humides et des surfaces d'échange à parois ou sèches, ces dernières étant disposées en aval des surfaces d'échange humides dans le circuit de ventilation et branchées en amont des surfaces d'échange humides dans le circuit de l'eau à refroidir.

Le réfrigérant comprend, dans le circuit de l'eau à refroidir, entre les deux surfaces d'échange 4,2, une dérivation commandée 12 dimensionnée de manière à permettre, lorsqu'elle est ouverte, à une partie prédéterminée de l'eau ayant traversé les surfaces d'échange sèches 4 de contourner les surfaces d'échange humides 2 de manière que ces dernières ne fonctionnent que partiellement. De préférence, les surfaces d'échange humides 2 sont constituées par des surfaces à film de liquide, arrosées par gicleurs de pulvérisation 3, et la dérivation 12 est dimensionnée de manière que lorsqu'elle est ouverte, l'effet de pulvérisation des gicleurs 3 soit détérioré et ces derniers n'arrosent qu'une partie des surfaces d'échange humides 2.

Application: notamment aux réfrigérants pour installations de climatisation.

## Description

La présente invention se rapporte à un réfrigérant hybride à circuit ouvert pour le refroidissement d'eau, comprenant à la fois des surfaces d'échange sans parois ou humides et des surfaces d'échange à parois ou sèches, ces dernières étant disposées en aval des surfaces d'échange humides dans le circuit de ventilation et branchées en amont des surfaces d'échange humides dans le circuit de l'eau à refroidir.

Des réfrigérants hybrides de ce type sont commercialisés depuis de nombreuses années par la demanderesse. Par un dimensionnement approprié des surfaces d'échange, il est possible d'adapter un réfrigérant de ce type aux conditions de fonctionnement de l'installation produisant la chaleur à dissiper par le réfrigérant (en particulier au débit et à la température de l'eau à refroidir) de manière à diminuer de façon substantielle la formation d'un panache qui se produit sous l'effet de l'évaporation de l'eau sur les surfaces d'échange humides et de la saturation de l'air à la sortie du réfrigérant et qui est d'autant plus dense que la différence entre la température de l'eau à refroidir et la température extérieure de l'air est élevée. Or, il serait désirable de supprimer pratiquement dans tous les cas la formation de panache sur de tels réfrigérants hybrides, cela par des moyens simples et fiables nécessitant une intervention minimale de la part de l'utilisateur.

A cet effet, suivant l'invention, le réfrigérant hybride pour le refroidissement d'eau, comprenant à la fois des surfaces d'échange humides et des surfaces d'échange sèches, ces dernières étant disposées en aval des surfaces d'échange humides dans le circuit de ventilation et branchées en amont des surfaces d'échange humides dans le circuit de l'eau à refroidir, comprend dans le circuit de l'eau à refroidir, entre les deux surfaces d'échange, une dérivation commandée de manière à permettre à une partie de l'eau ayant traversé les surfaces d'échange sèches de contourner les surfaces d'échange humides de manière que ces dernières ne fonctionnent que partiellement.

Ainsi, dès que les conditions climatiques sont favorables à la formation d'un panache et que les conditions de fonctionnement le permettent (comme c'est le cas par exemple à des températures ambiantes de l'ordre de 10 à 15°C pour la dissipation de la chaleur d'installations de climatisation), le passage du fonctionnement sans dérivation à un fonctionnement avec dérivation permet de favoriser l'échange sur les surfaces d'échange sèches au détriment de l'échange sur les surfaces d'échange humides, d'où une diminution de l'évaporation d'eau et une diminution de la température de l'air sortant des surfaces d'échange sèches, ce qui se répercute immédiatement sur la réduction, voire la suppression de l'effet de panache. En même temps, on obtient une économie d'eau du fait de la diminution de l'évaporation.

Bien que ladite dérivation puisse être commandée de façon progressive, il peut être avantageux, du point de vue commande, d'utiliser à cet effet une vanne du type tout ou rien judicieusement dimensionnée pour permettre, lorsqu'elle est ouverte, la dérivation d'une partie prédéterminée de l'eau.

De préférence, dans le cas d'un réfrigérant dont les surfaces d'échange humides sont constituées par des surfaces à film de liquide, arrosées par des gicleurs de pulvérisation, la dérivation est dimensionnée de manière que l'effet de pulvérisation des gicleurs soit détérioré et que les gicleurs n'arrosent qu'une partie des surfaces d'échange humides lorsque la dérivation est ouverte.

Avantageusement, la dérivation est dimensionnée de manière que lorsqu'elle est ouverte, les gicleurs de pulvérisation n'arrosent que 30 à 70%, de préférence de 40 à 60% et plus particulièrement environ 50% des surfaces d'échange humides.

La dérivation peut être avantageusement commandée par une vanne d'arrêt motorisée qui est de préférence disposée de manière à ne provoquer aucune retenue d'eau lorsque la vanne est fermée.

La vanne d'arrêt à deux positions du type tout-ou-rien peut par ailleurs comprendre des moyens de réglage de la section de passage, ou alors une vanne de réglage supplémentaire peut être prévue sur la dérivation, en vue du réglage du débit de cette dernière. Dans un cas comme dans l'autre, ce réglage est avantageusement effectué en usine par le constructeur, sans que l'utilisateur n'ait à intervenir.

Afin que le réfrigérant puisse, lorsque les conditions le permettent, par exemple en hiver, fonctionner également en réfrigérant sec, une dérivation supplémentaire peut être prévue pour permettre à la totalité de l'eau à refroidir de contourner les surfaces d'échange humides.

En se référant aux dessins schématiques annexés, on va décrire ci-après plus en détail deux modes de réalisation illustratifs et non limitatifs d'un réfrigérant conforme à l'invention; sur les dessins :
la figure 1 représente un réfrigérant conforme à l'invention avec une dérivation partielle contournant les surfaces d'échanges humides;
la figure 2 représente un réfrigérant avec deux dérivations, l'une partielle, l'autre complète, contournant les surfaces d'échange humides.

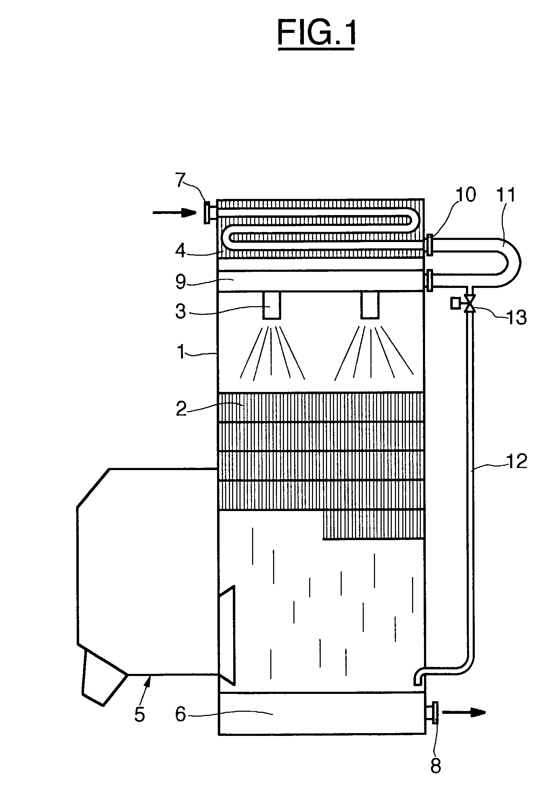

Le réfrigérant hybride tel qu'illustré par la figure 1 comprend une enveloppe verticale 1 dans laquelle est disposée à mi-hauteur une batterie de surfaces d'échange 2 sans parois ou humides, par exemple du type à film, de préférence sous forme de blocs d'éléments en matière plastique dits packings. Les surfaces d'échange 2 sont surmontées d'un système de gicleurs de pulvérisation 3. En partie haute, l'enveloppe 1 renferme des surfaces d'échange 4 à parois ou sèches, représentées sous la forme d'une batterie de tubes à ailettes. En dessous des surfaces d'échange humides 2, un groupe motoventilateur 5 est monté latéralement à l'extérieur sur l'enveloppe 1 au-dessus d'un bassin 6 dans lequel est récupérée l'eau pulvérisée par les gicleurs 3 et s'écoulant sous forme de film sur les surfaces d'échange 2.

Le raccord d'entrée de l'eau à refroidir dans le réfrigérant, au niveau des surfaces d'échange sèches 4, est référencé 7, et le raccord de sortie d'eau du réfrigérant, au niveau du bassin 6, est référencé 8.

Les gicleurs 3 sont alimentés par une rampe 9 qui est reliée par une liaison 11 au raccord de sortie 10 de la surface d'échange 4.

Une dérivation 12 mène de la liaison 11 dans le bassin 6, en contournant les surfaces d'échange humides 2. Cette dérivation 12 est commandée par une vanne motorisée 13, avantageusement du type tout ou rien, installée dans la dérivation 12 au point le plus haut de cette dernière. La section de passage de la vanne 13 est choisie de manière que lorsque cette vanne est ouverte, le débit d'eau passant par la dérivation 12 en contournant les gicleurs 3 des surfaces d'échange humides 2 soit tel que les gicleurs 13 ne soient que partiellement alimentés et que leur effet de pulvérisation soit détérioré, d'où un arrosage partiel seulement des surfaces d'échange humides 2. Cette détérioration de l'arrosage des surfaces d'échange 2 peut être telle que seuls 30 à 70% , de préférence 40 à 60% et plus particulièrement environ 50% de ces surfaces d'échange humides soient arrosés par les gicleurs 3.

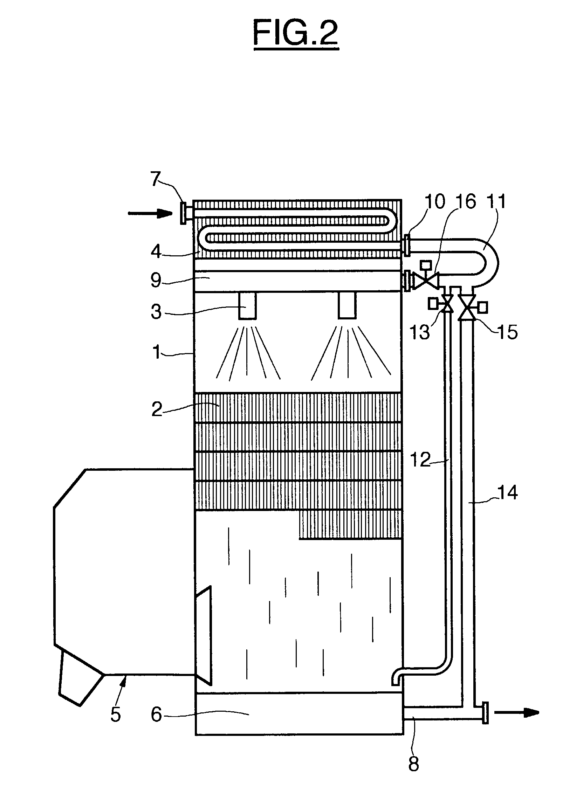

Le réfrigérant suivant la figure 2 comprend, tout comme celui de la figure 1, une enveloppe verticale 1 renfermant en partie haute des surfaces d'échange sèches 4 et à mi-hauteur des surfaces d'échange humides 2 surmontées de gicleurs de pulvérisation 3 alimentés par une rampe 9. On retrouve par ailleurs le groupe motoventilateur 5 et le bassin 6 de récupération de l'eau pulvérisée par les gicleurs 3 sur les surfaces d'échange 2.

En plus de la dérivation 12 avec vanne motorisée 13 du type tout ou rien, permettant à une partie prédéterminée de l'eau ayant traversé les surfaces d'échange sèches 4 de contourner les gicleurs de pulvérisation 3 et donc les surfaces d'échange humides 2, il est prévu ici, sur la liaison 11 entre le raccord de sortie 10 des surfaces d'échange sèches 4 et la rampe 9 des gicleurs de pulvérisation 3, une dérivation supplémentaire 14 commandée par une vanne d'arrêt motorisée 15 du type tout-ou-rien et rejoignant directement le raccord de sortie d'eau 8 du réfrigérant. De plus, il est prévu sur la liaison 11, entre le point de départ de la dérivation 12 et l'entrée de la rampe 9, une vanne d'arrêt motorisée 16 qui, lorsqu'elle est fermée et lorsque les vannes 13 et 15 sont ouvertes, assure que la totalité de l'eau ayant traversé les surfaces d'échange sèches 4 contourne les surfaces d'échange humides 2.

Il est ainsi possible de faire travailler le réfrigérant en tant que réfrigérant sec, lorsque les conditions de fonctionnement de l'installation desservie par le réfrigérant le permettent (notamment en hiver dans le cas d'installations de climatisation). Dans ce cas, la formation d'un panache est complètement supprimée.

Pour permettre un réglage de la dérivation 12 en vue de l'adaptation d'un réfrigérant standard à chaque installation, il est possible, soit de prévoir un réglage de débit sur la vanne d'arrêt 13 commandant la dérivation, soit de prévoir, sur la dérivation, une vanne de réglage indépendante de la vanne d'arrêt 13.

Dans les deux cas, le réglage est avantageusement effectué en usine par le constructeur, de sorte que l'utilisateur n'a pas à intervenir sur ce point. L'intervention de l'utilisateur se limite donc à la commande de la vanne d'arrêt 13 et des vannes d'arrêt 15 et 16 en fonction des conditions de fonctionnement et des conditions atmosphériques.

Toutefois, il est également possible, dans le cadre de l'invention, d'utiliser une vanne à trois voies modulante pour commander la dérivation.

## Revendications

1. Réfrigérant hybride à circuit ouvert pour le refroidissement d'eau, comprenant à la fois des surfaces d'échange sans parois ou humides et des surfaces d'échange à parois ou sèches, ces dernières étant disposées en aval des surfaces d'échange humides dans le circuit de ventilation et branchées en amont des surfaces d'échange humides dans le circuit de l'eau à refroidir, caractérisé par le fait qu'il comprend, dans le circuit de l'eau à refroidir, entre les deux surfaces d'échange (4,2), une dérivation commandée (12) de manière à permettre, lorsqu'elle est ouverte, à une partie de l'eau ayant traversé les surfaces d'échange sèches (4) de contourner les surfaces d'échange humides (2) de manière que ces dernières ne fonctionnent que partiellement.

2. Réfrigérant suivant la revendication 1, les surfaces d'échange humides étant constituées par des surfaces à film de liquide, arrosées par gicleurs de pulvérisation, caractérisé par le fait que la dérivation (12) est dimensionnée de manière que lorsqu'elle est ouverte, l'effet de pulvérisation des gicleurs (3) soit détérioré et ces derniers n'arrosent qu'une partie des surfaces d'échange humides (2).

3. Réfrigérant suivant la revendication 1 ou 2, caractérisé par le fait que la dérivation (12) est dimensionnée de manière que, lorsqu'elle est ouverte, les gicleurs (3) n'assurent que l'arrosage de 30 à 70% de la surface d'échange humide (2).

4. Réfrigérant suivant la revendication 3, caractérisé par le fait que la dérivation (12) est dimensionneé de manière que, lorsqu'elle est ouverte, les gicleurs (3) n'assurent que l'arrosage de 40 à 60% des surfaces d'échange humides (2).

5. Réfrigérant suivant la revendication 4, caractérisé par le fait que la dérivation (12) est dimensionnée de manière que, lorsqu'elle est ouverte, des gicleurs (3) n'assurent que l'arrosage d'environ 50% des surfaces d'échange humides (2).

6. Réfrigérant suivant l'une quelconque des revendications précédentes, caractérisé par le fait que la dérivation (12) est commandée par une vanne d'arrêt motorisée (13) du type tout ou rien.

7. Réfrigérant suivant l'une quelconque des revendications précédentes, caractérisé par le fait qu'il comprend une dérivation supplémentaire (14) dimensionnée de manière que, lorsqu'elle est ouverte, la totalité de l'eau ayant traversé les surfaces d'échange sèches (4) contourne les surfaces d'échange humides (2).

8. Réfrigérant suivant la revendication 7, caractérisé par le fait que la dérivation supplémentaire (14) renferme une vanne d'arrêt motorisée (15) du type tout ou rien.

9. Réfrigérant suivant la revendication 8, caractérisé par le fait qu'il comprend, en outre, une vanne d'arrêt motorisée (16) du type tout ou rien entre les dérivations (12, 14) et la rampe (9) alimentant les gicleurs de pulvérisation (3).

10. Réfrigérant suivant l'une quelconque des revendications 1 à 7, caractérisé par le fait que le débit de la dérivation (12) est réglable.
